# EUROPEAN PATENT APPLICATION

(11) **EP 2 876 844 A1**
(43) Date of publication of application: **27.05.2015**
(21) Application number: 14193093.3
(22) Date of filing: 13.11.2014
(51) Int. Cl.: H04L 12/26

(54) **SELF-DEBUGGING ROUTER PLATFORM**

(30) Priority: 22.11.2013 US 201314087863
(71) Applicant: Telefonaktiebolaget L M Ericsson (PUBL), SE-164 83 Stockholm (SE)
(72) Inventor: Arisoylu, Mustafa, San Jose, CA California 95134 (US); Lakshmikanthan, Ramanathan, Santa Clara, CA California 95051 (US); Ahn, Joon, San Jose, CA California 95134 (US); Anand, Prashant, 560066 Bangalore (IN)
(74) Representative: Rees, Simon John Lewis

(57) **Abstract**

Exemplary methods for network debugging include a control plane of a first network device generating and injecting debug traffic into a data plane of the first network device such that the debug traffic appears to the data plane as if it originated from an external network device. The methods include the data plane transmitting the debug traffic to a network. In one embodiment, the control plane collects debug information of the debug traffic as it is processed by the data plane and the network. In one embodiment, the first network device is configured to exchange debug information of the debug traffic with a second network device, and to provide the debug information to an operator.

## Description

### FIELD

Embodiments of the invention relate to the field of packet networks; and more specifically, to the self-debugging of networks and network devices therein.

### BACKGROUND

A network is typically connected to multiple other networks. Each network, in turn, includes many networking devices, such as routers, servers, blades, etc. Due to the complexity of these networks, many problems can arise. For example, a network device may fail to connect to a server because of a failure in a specific connection or a failure in one of the devices itself. To further exasperate the problem, often times these networking issues are very difficult to trouble shoot (i.e., debug). There are many reasons why a network issue can be difficult to debug. For example, due to the numerous possible connections between these many networking devices, it is often very difficult to even isolate the problem. Further, the operator tasked with debugging the problem may not have access to certain portions of some or all of the networks. Thus, it can be very timing consuming and costly to debug a problem.

Conventionally, Internet Control Message Protocol (ICMP) based debugging tools (e.g., TraceRoute, Ping, etc.) are deployed to debug certain anomalies in the network. These conventional debugging tools are used to check the liveliness of routers (e.g., whether the debugged routers can respond to ICMP debug messages). These conventional debugging tools, however, cannot check for problems beyond the liveliness of a router. For example, even if a router can to respond to ICMP based debug traffic, it may still nevertheless have other problems such as configuration errors (e.g., incorrect Access Control List rules, etc.). Further, conventional debugging tools do not have the ability to provide information relating to a path taken by the debug traffic and timing information concerning when the debug traffic traversed certain portion of the network device or the network.

### SUMMARY

According to one embodiment of the invention, a method for self-debugging of a network comprising a first network device communicatively coupled to a second network device, wherein the first network device and the second network device are communicatively coupled to a plurality of other network devices. In one embodiment, the method comprises generating, by a control plane of the first network device, a first debug traffic that simulates traffic received from a first of the plurality of other network devices in the network.

In one embodiment, the method includes injecting, by the control plane of the first network device, the generated first debug traffic into a data plane of the first network device such that the first debug traffic appears to the data plane as if it originated from the first of the plurality of other network devices in the network.

In at least one embodiment, the method includes transmitting, by the data plane of the first network device, a second debug traffic associated with the first debug traffic to a second of the plurality of other network devices, and collecting, by the control plane of the first network device, a first debug information of the first debug traffic and a second debug information of the second debug traffic.

In one aspect of the invention, the method includes transmitting, by the control plane of the first network device, the collected first debug information and second debug information to a control plane of the second network device, and receiving, by a data plane of the second network device, a third debug traffic associated with the first debug traffic from a third of the plurality of other network devices.

In one embodiment, the method further includes collecting, by the control plane of the second network device, a third debug information of the third debug traffic, and providing, by the control plane of the second network device, the first, second, and third debug information.

In one embodiment, each packet of the first, second, and third debug traffic is tagged with predetermined information indicating the packet is debug traffic, wherein the first, second, and third debug information is only collected on packets tagged with the predetermined information, and wherein the first debug traffic is generated based on information of a routing structure maintained by the first network device.

In one embodiment, the method further includes monitoring, by the control plane of the first network device, traffic received from the first of the plurality of other network devices, and generating, by the control plane of the first network device, the first debug traffic based on the monitored traffic. In at least on embodiment, the method includes processing, by the data plane of the first network device, the first debug traffic as the simulated traffic would be processed, and collecting, by the control plane of the first network device, as part of the first debug information, debug information each time the first debug traffic is processed by the data plane of the first network device.

In one embodiment, the first debug information includes timestamp of each time the first debug traffic is processed by the data plane of the first network device. In another embodiment, the first debug information further includes information of which path of the data plane of the first network device processed the first debug traffic. In yet another embodiment, the first debug information further includes information of success or failure of each time the first debug traffic is processed by the data plane of the first network device.

In one embodiment, the method includes transmitting, by the data plane of the second network device, a fourth debug traffic associated with the first debug traffic to a fourth of the plurality of other network devices, and collecting, by the control plane of the second network device, a fourth debug information of the fourth debug traffic. In one embodiment, the method also includes receiving, by the data plane of the second network device, a fifth debug traffic associated with the first debug traffic from a fifth of the plurality of other network devices, and collecting, by the control plane of the second network device, a fifth debug information of the fifth debug traffic.

### BRIEF DESCRIPTION OF THE DRAWINGS

Embodiments of the invention are illustrated by way of example and not limitation in the figures of the accompanying drawings in which like references indicate similar elements.
Figure 1 is a block diagram illustrating a debugging network device according to one embodiment.
Figure 2 is a block diagram illustrating a debugging network device according to one embodiment.
Figure 3 is a flow diagram illustrating a method for debugging a network device according to one embodiment.
Figure 4 is a block diagram illustrating a debugging network of debugging nodes according to one embodiment.
Figure 5 is a block diagram illustrating a debugging network device according to one embodiment.
Figure 6 is a block diagram illustrating multiple debugging network devices according to one embodiment.
Figure 7 is a flow diagram illustrating a method for debugging a network according to one embodiment.
Figure 8 is a flow diagram illustrating a method for debugging a network according to one embodiment.
Figure 9 is a flow diagram illustrating a method for debugging a network according to one embodiment.
Figure 10 is a block diagram illustrating a generic router platform.
Figure 11 is a block diagram illustrating a generic router platform.
Figure 12 is a block diagram illustrating a generic router platform.
Figure 13 is a block diagram illustrating a generic router platform and typical service chaining.

### DESCRIPTION OF EMBODIMENTS

In the following description, numerous specific details are set forth. However, it is understood that embodiments of the invention may be practiced without these specific details. In other instances, well-known circuits, structures and techniques have not been shown in detail in order not to obscure the understanding of this description.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

In the following description and claims, the terms "coupled" and "connected," along with their derivatives, may be used. It should be understood that these terms are not intended as synonyms for each other. "Coupled" is used to indicate that two or more elements, which may or may not be in direct physical or electrical contact with each other, co-operate or interact with each other. "Connected" is used to indicate the establishment of communication between two or more elements that are coupled with each other.

An electronic device (e.g., an end station, a network device) stores and transmits (internally and/or with other electronic devices over a network) code (composed of software instructions) and data using machine-readable media, such as non-transitory machine-readable media (e.g., machine-readable storage media such as magnetic disks; optical disks; read only memory; flash memory devices; phase change memory) and transitory machine-readable transmission media (e.g., electrical, optical, acoustical or other form of propagated signals - such as carrier waves, infrared signals). In addition, such electronic devices include hardware, such as a set of one or more processors coupled to one or more other components - e.g., one or more non-transitory machine-readable storage media (to store code and/or data) and network connections (to transmit code and/or data using propagating signals), as well as user input/output devices (e.g., a keyboard, a touchscreen, and/or a display) in some cases. The coupling of the set of processors and other components is typically through one or more interconnects within the electronic devices (e.g., busses and possibly bridges). Thus, a non-transitory machine-readable medium of a given electronic device typically stores instructions for execution on one or more processors of that electronic device. One or more parts of an embodiment of the invention may be implemented using different combinations of software, firmware, and/or hardware.

As used herein, a network device (e.g., a router, switch, bridge) is a piece of networking equipment, including hardware and software, which communicatively interconnects other equipment on the network (e.g., other network devices, end stations). Some network devices are "multiple services network devices" that provide support for multiple networking functions (e.g., routing, bridging, switching, Layer 2 aggregation, session border control, Quality of Service, and/or subscriber management), and/or provide support for multiple application services (e.g., data, voice, and video). Subscriber end stations (e.g., servers, workstations, laptops, netbooks, palm tops, mobile phones, smartphones, multimedia phones, Voice Over Internet Protocol (VOIP) phones, user equipment, terminals, portable media players, GPS units, gaming systems, set-top boxes) access content/services provided over the Internet and/or content/services provided on virtual private networks (VPNs) overlaid on (e.g., tunneled through) the Internet. The content and/or services are typically provided by one or more end stations (e.g., server end stations) belonging to a service or content provider or end stations participating in a peer-to-peer (P2P) service, and may include, for example, public webpages (e.g., free content, store fronts, search services), private webpages (e.g., username/password accessed webpages providing email services), and/or corporate networks over VPNs. Typically, subscriber end stations are coupled (e.g., through customer premise equipment coupled to an access network (wired or wirelessly)) to edge network devices, which are coupled (e.g., through one or more core network devices) to other edge network devices, which are coupled to other end stations (e.g., server end stations).

As used herein, a "server" is defined as any combination of hardware and software (e.g., operating system and server applications) that is capable of providing services to clients. Throughout the description, references are made to a blade. As used herein, a "blade" is any combination of hardware and software (e.g., operating system and the client and server applications software) which is capable of operating not only as a server, but also as a client. A "blade server" is an instance of a server on a blade, whereas a "blade client" is an instance of a client on a blade. A blade can both be a client and a server simultaneously. In this description, blade server and server are used interchangeably.

As used herein, a "router platform" can be a router platform hosting multiple network functions/applications/services (such as L2/L3 P/PE, Subscriber Management, Carrier Grade Network Address Translation (CGNAT), Deep Packet Inspection (DPI), etc.). A "router platform" can also be a simple switch which does a layer 2 bridging/switching. Further, a "router platform" can be a network of devices where a certain set of nodes perform functions of a control plane, whereas others perform functions of the data plane (e.g. packet forwarding and processing functions). Thus, a router platform can be realized by a single node in the network, or by a set of nodes in the network (e.g. in a Software Defined Network (SDN) environment).

Network devices are commonly separated into a control plane and a data plane (sometimes referred to as a forwarding plane or a media plane). In the case that the network device is a router (or is implementing routing functionality), the control plane typically determines how data (e.g., packets) is to be routed (e.g., the next hop for the data and the outgoing port for that data), and the data plane is in charge of forwarding that data. For example, the control plane typically includes one or more routing protocols (e.g., an exterior gateway protocol such as Border Gateway Protocol (BGP) (RFC 4271), Interior Gateway Protocol(s) (IGP) (e.g., Open Shortest Path First (OSPF) (RFC 2328 and 5340), Intermediate System to Intermediate System (IS-IS) (RFC 1142), Routing Information Protocol (RIP) (version 1 RFC 1058, version 2 RFC 2453, and next generation RFC 2080)), Label Distribution Protocol (LDP) (RFC 5036), Resource Reservation Protocol (RSVP) (RFC 2205, 2210, 2211, 2212, as well as RSVP-Traffic Engineering (TE): Extensions to RSVP for LSP Tunnels RFC 3209, Generalized Multi-Protocol Label Switching (GMPLS) Signaling RSVP-TE RFC 3473, RFC 3936, 4495, and 4558)) that communicate with other network devices to exchange routes and select those routes based on one or more routing metrics.

Routes and adjacencies are stored in one or more routing structures (e.g., Routing Information Base (RIB), Label Information Base (LIB), one or more adjacency structures) on the control plane. The control plane programs the data plane with information (e.g., adjacency and route information) based on the routing structure(s). For example, the control plane programs the adjacency and route information into one or more forwarding structures (e.g., Forwarding Information Base (FIB), Label Forwarding Information Base (LFIB), and one or more adjacency structures) on the data plane. The data plane uses these forwarding and adjacency structures when forwarding traffic.

Each of the routing protocols downloads route entries to a main RIB based on certain route metrics (the metrics can be different for different routing protocols). Each of the routing protocols can store the route entries, including the route entries which are not downloaded to the main RIB, in a local RIB (e.g., an OSPF local RIB). A RIB module that manages the main RIB selects routes from the routes downloaded by the routing protocols (based on a set of metrics) and downloads those selected routes (sometimes referred to as active route entries) to the data plane. The RIB module can also cause routes to be redistributed between routing protocols.

For layer 2 forwarding, the network device can store one or more bridging tables that are used to forward data based on the layer 2 information in that data.

Typically, a network device includes a set of one or more line cards, a set of one or more control cards, and optionally a set of one or more service cards (sometimes referred to as resource cards). These cards are coupled together through one or more interconnect mechanisms (e.g., a first full mesh coupling the line cards and a second full mesh coupling all of the cards). The set of line cards make up the data plane, while the set of control cards provide the control plane and exchange packets with external network devices through the line cards. The set of service cards can provide specialized processing (e.g., Layer 4 to Layer 7 services (e.g., firewall, Internet Protocol Security (IPsec) (RFC 4301 and 4309), Intrusion Detection System (IDS), peer-to-peer (P2P), Voice over IP (VoIP) Session Border Controller, Mobile Wireless Gateways (Gateway General Packet Radio Service (GPRS) Support Node (GGSN), Evolved Packet Core (EPC) Gateway)). By way of example, a service card may be used to terminate IPsec tunnels and execute the attendant authentication and encryption algorithms.

As used herein, a node forwards IP packets on the basis of some of the IP header information in the IP packet; where IP header information includes source IP address, destination IP address, source port, destination port (where "source port" and "destination port" refer herein to protocol ports, as opposed to physical ports of a network device), transport protocol (e.g., user datagram protocol (UDP) (RFC 768, 2460, 2675, 4113, and 5405), Transmission Control Protocol (TCP) (RFC 793 and 1180), and differentiated services (DSCP) values (RFC 2474, 2475, 2597, 2983, 3086, 3140, 3246, 3247, 3260, 4594, 5865, 3289, 3290, and 3317). Nodes are implemented in network devices. A physical node is implemented directly on the network device, whereas a virtual node is a software, and possibly hardware, abstraction implemented on the network device. Thus, multiple virtual nodes may be implemented on a single network device.

A network interface may be physical or virtual; and an interface address is an IP address assigned to a network interface, be it a physical network interface or virtual network interface. A physical network interface is hardware in a network device through which a network connection is made (e.g., wirelessly through a wireless network interface controller (WNIC) or through plugging in a cable to a port connected to a network interface controller (NIC)). Typically, a network device has multiple physical network interfaces. A virtual network interface may be associated with a physical network interface, with another virtual interface, or stand on its own (e.g., a loopback interface, a point to point protocol interface). A network interface (physical or virtual) may be numbered (a network interface with an IP address) or unnumbered (an network interface without an IP address). A loopback interface (and its loopback address) is a specific type of virtual network interface (and IP address) of a node (physical or virtual) often used for management purposes; where such an IP address is referred to as the nodal loopback address. The IP address(es) assigned to the network interface(s) of a network device, are referred to as IP addresses of that network device; at a more granular level, the IP address(es) assigned to network interface(s) assigned to a node implemented on a network device, can be referred to as IP addresses of that node.

Certain network devices (e.g., certain edge network devices) internally represent subscriber end stations (or sometimes customer premise equipment (CPE) such as a residential gateway (e.g., a router, modem)) using subscriber circuits. A subscriber circuit uniquely identifies within the network device a subscriber session and typically exists for the lifetime of the session. Thus, a network device typically allocates a subscriber circuit when the subscriber connects to that network device, and correspondingly de-allocates that subscriber circuit when that subscriber disconnects. Each subscriber session represents a distinguishable flow of packets communicated between the network device and a subscriber end station (or sometimes CPE such as a residential gateway or modem) using a protocol, such as the point-to-point protocol over another protocol (PPPoX) (e.g., where X is Ethernet or Asynchronous Transfer Mode (ATM)), Ethernet, 802.1Q Virtual LAN (VLAN), Internet Protocol, or ATM). A subscriber session can be initiated using a variety of mechanisms (e.g., manual provisioning a dynamic host configuration protocol (DHCP), DHCP/client-less internet protocol service (CLIPS) or Media Access Control (MAC) address tracking). For example, the point-to-point protocol (PPP) is commonly used for DSL services and requires installation of a PPP client that enables the subscriber to enter a username and a password, which in turn may be used to select a subscriber record. When DHCP is used (e.g., for cable modem services), a username typically is not provided; but in such situations the MAC address of the hardware in the subscriber end station (or CPE) is provided. The use of DHCP and CLIPS on the network device captures the MAC addresses and uses these addresses to distinguish subscribers and access their subscriber records.

As used herein, server-side load balancing is a technology where service requests are distributed among a pool of blade servers in a transparent manner. Server load balancing introduces various advantages such as scalability, high performance, and high availability (in case of failures).

A flow, as used herein, is a network traffic that can be identified by a set of attributes. For example, attributes which may be used to identify a flow include the 5 tuple (source/destination IP address, Protocol, and source/destination TCP/UDP Port), source/destination Media Access Control (MAC) address, or any other set of bits on the packets (e.g. the Priority Code Point (PCP) bits, Virtual Local Access Network (VLAN) IDs, etc.). For example, over a certain link (e.g., from node A to node B) in a network, packets passing through with a specific source IP address (e.g., IP1) is a flow identified by the source IP address over that link with the attributes (IP1, A, B). As another example, in an access network, traffic originated from a subscriber can also be considered as a flow where one can identify that flow as the traffic passing through the UNI/NNI/ANI port of the Residential Gateway (RG). Such subscriber flows in access and edge networks can also be identified by the subscriber IP addresses. Further, upstream/downstream subscriber flow (i.e., the flow from the subscriber/network side to the network side/subscriber) will have the IP address of the subscriber as the source/destination IP address, respectively. Flow ID is an ID or tag used to uniquely identify a flow. For example, the set of attributes used to identify a flow may be mapped to natural numbers to construct flow IDs.

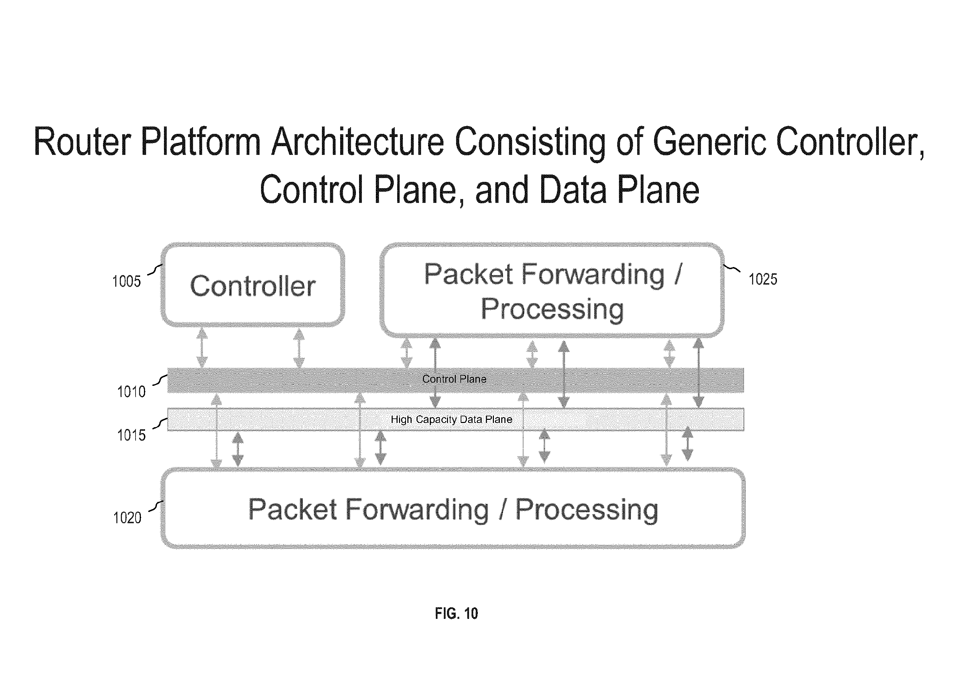

Router platforms are well known in the art. For the convenience of the reader, however, a brief overview is provided here. Figure 10 is a block diagram illustrating generic controller 1005 coupled to packet forwarding/processing module 1025 over control plane 1010. Controller 1005 is operable to configure, control, and manage packet forwarding/processing module 1025. Control plane 1010 coupling controller 1005 to packet forwarding/processing module 1025 can either be the control plane of a router platform or the control plane interface in a Software Defined Network (SDN) environment. The data traffic is forwarded along data plane 1015 and processed by packet forwarding/processing module 1020. Data plane 1015 and packet forwarding/processing module 1020 can either be the data plane of a router platform or the data plane of in an SDN environment, which includes SDN switches as well as the connectivity between them.

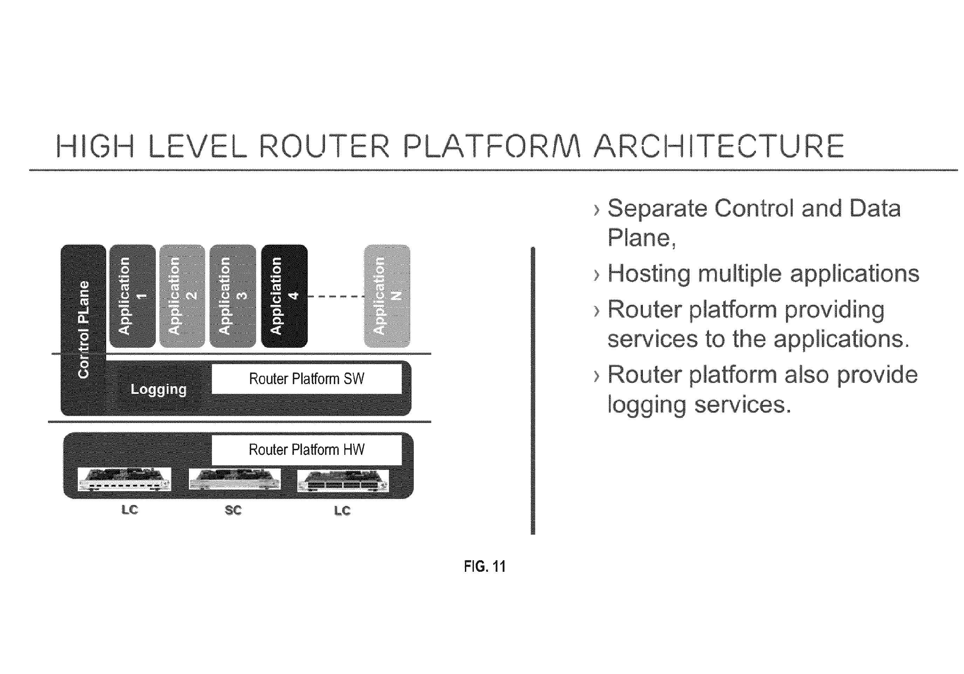

Figure 11 is a block diagram illustrating a high-level router platform architecture. Typically, a router platform includes a control plane and a data plane. The control plane includes at least a controller. The data plane includes packet forwarding/processing functions which may be implemented as part of line cards (LCs) and service cards (SCs). A router platform is operable, although not required, to execute one or more applications. These applications include, for example, various network functions such as subscriber management (e.g., Broadband Network Gateway (BNG), Broadband Remote Access Server (BRAS), Gateway GPRS Support Node (GGSN), Evolved Packet Core (EPC), Deep Packet Inspection (DPI), Carrier Grade Network Address Translation (CGNAT), etc.) A router platform is partitioned into a router platform software (SW) and a router platform hardware (HW). The router platform SW provides various services (e.g., logging) to the applications as well as users of the router platform. The control plane of a router platform is responsible for managing, configuring, and controlling the router platform. The control plane provides the North Bound Interfaces (NBI) to the users of the router platform. The control plane hosts routing protocol daemons that form the Routing Information Base (RIB) and configures the Forwarding Information Base (FIB).

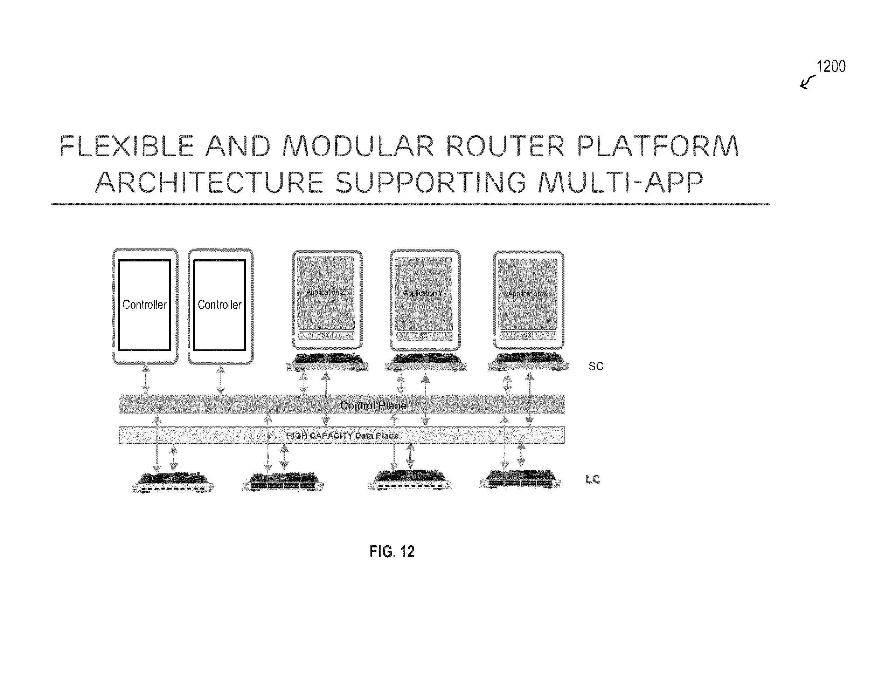

Figure 12 is a block diagram illustrating a flexible and modular router platform architecture for supporting multiple applications. As illustrated, the router platform includes a control plane coupling a Router Processor (RP) (i.e., the controller), the line cards (LCs), and service cards (SCs). The LCs and SCs include packet forwarding/processing functions. The control plane is operable to communicate configuration information to the data plane, which includes not only the LCs and SCs, but also the system to connect them to each other (e.g., a switch fabric).

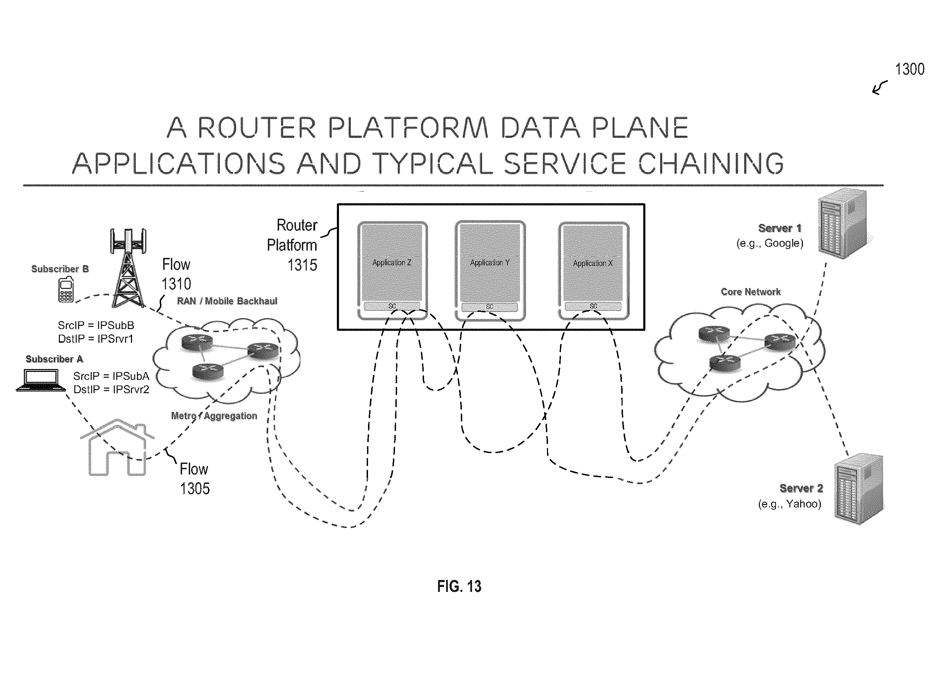

Figure 13 is a block diagram illustrating a typical service chaining in a router platform. As illustrated, subscriber A (e.g., a laptop user) is connected (i.e., has access) to server 2 (which may be hosting a web service such as Yahoo@) via flow 1305. Flow 1305 includes the data traffic traversing through router platform 1315. As the data traffic associated with subscriber A traverses router platform 1315, it is processed by the data plane of the router. In the illustrated example, subscriber A traffic causes applications X and Z to be executed. Figure 13 also illustrates subscriber B (e.g., a mobile user) is connected (i.e., has access) to server 1 (which may be hosting a web service such as Google®) via flow 1310. Flow 1310 also includes the data traffic traversing through router platform 1315. As the data traffic associated with subscriber B traverses router platform 1315, it is processed by the data plane of the router. In the illustrated example, subscriber B traffic causes applications Y and Z to be executed. By way of example, flow 1305 may be identified by a set of attributes consisting of (source IP address = IPSubA, destination IP address = IPSrv2), where IPSubA is the IP address of subscriber A and IPSrv2 is the IP address of server 2. Flow 1310 may be identified by a set of attributes consisting of (source IP address = IPSubB, destination IP address = IPSrv1), where IPSubB is the IP address of subscriber B and IPSrv1 is the IP address of server 1.

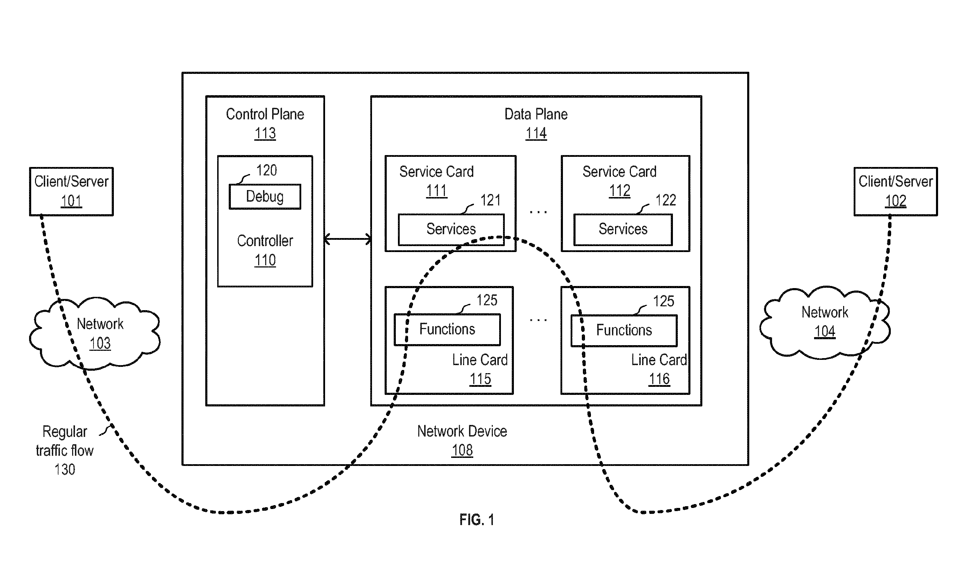

Various embodiments of the present invention will now be described through the discussion of the figures below in which like references indicate similar elements. Figure 1 is a block diagram illustrating network device 108 according to one embodiment. Network device 108 may be implemented as part of a router platform described above with the added debugging capability of the present invention. According to one embodiment, network device 108 is communicatively coupled to clients/servers 101-102 (which shall herein be referred to simply as clients) via networks 103-104, respectively. Clients 101-102 may be any type of clients such as a server, a personal computer (e.g., desktops, laptops, and tablets), a "thin" client, a personal digital assistant (PDA), a Web enabled appliance, a gaming device, a media player, or a mobile phone (e.g., Smartphone), etc. Networks 103-104 may be any type of networks such as a local area network (LAN), a wide area network (WAN) such as Internet, a corporate intranet, a metropolitan area network (MAN), a storage area network (SAN), a bus, or a combination thereof, wired and/or wireless. Although only two clients are shown, it will be appreciated that the present invention is equally applicable to network configurations having more or less clients communicatively coupled to network device 108 via more or less networks.

In the embodiment illustrated, network device 108 includes control plane 113 coupled to data plane 114. Data plane 114 includes line cards 115-116 and service cards 111-112. Although two line cards and two service cards are shown, it shall be appreciated that the self-debugging mechanisms of the present are equally applicable to a data plane having more or less line cards and service cards. Line cards 115-116 include network interfaces (not shown) for exchanging packets with external network devices (e.g., clients 101-102). Line cards 115-116 also include functions 125-126, respectively. In one embodiment, functions 125-126 include processing logic for receiving and forwarding traffic along data plane 114. Other processing functions can be implemented as part functions 125-126 without departing from the broader scope and spirit of the present invention.

In one embodiment, service cards 111-112 include services 121-122, respectively. Services 121-122 can provide specialized processing (e.g., Layer 4 to Layer 7 services (e.g., firewall, Internet Protocol Security (IPsec) (RFC 4301 and 4309), Intrusion Detection System (IDS), peer-to-peer (P2P), Voice over IP (VoIP) Session Border Controller, Mobile Wireless Gateways (Gateway General Packet Radio Service (GPRS) Support Node (GGSN), Evolved Packet Core (EPC) Gateway)).

In one embodiment, control plane 113 includes controller 110 operable to manage, configure, and control network device 108. For example, controller 110 configures data plane 114 with information that enables line cards 115-116 to receive and forward traffic flows. Controller 110, in one embodiment, also configures data plane 114 with information that enables service cards 111-112 to determine which services to execute on the traffic flows. For example, controller 110 is operable to program the adjacency and route information into one or more forwarding structures (e.g., Forwarding Information Base (FIB), Label Forwarding Information Base (LFIB), and one or more adjacency structures) on data plane 114. Data plane 114 (e.g., line cards 115-116) uses these forwarding and adjacency structures when forwarding traffic.

In one embodiment, controller 110 includes debug module 120. In at least one embodiment, debug module 120 is configured to generate realistic debug traffic for the purpose of debugging network 108 and/or debugging the network which network device 108 is directly or indirectly coupled to. As used herein, "realistic debug traffic" refers to traffic that simulates traffic received from an external network device. In other words, the generated "realistic debug traffic" appears as if it originated from an external network device (e.g., clients 101-102) as part of a "regular traffic flow". As used herein a "regular traffic flow" is any traffic flow that is exchanged between the various nodes of the network as part of the normal operation. Throughout the description, references are also made to "simulated traffic flow". As used herein, "simulated traffic flow" simply refers to the regular traffic flow that is being simulated (i.e., mimicked) by the realistic debug traffic flow. Thus, the terms "regular traffic flow" and "simulated traffic flow" are used interchangeably throughout the description. The generated "realistic debug traffic" and the "regular/simulated traffic flow" can be control flows carrying control information and/or data flows carrying user traffic.

Debug module 120 is further configured to inject (i.e., send) the generated realistic debug traffic into data plane 114 and/or into a network, such that the injected traffic appears as if it was received from an external network device through line cards 115-116. Depending on the type of injected debug traffic, the debug traffic can be processed by data plane 114 as if it was part of a regular traffic flow. For example, the injected realistic debug traffic can be processed by one or more functions 125-126 of line cards 115-116, and/or processed by one or more services 121-122 of service cards 111-112. In an embodiment where the debug traffic is injected into the network, the debug traffic is also processed by the external network devices as the simulated traffic would normally be processed.

According to one embodiment, as the injected realistic debug traffic is processed by data plane 114 and/or external network devices, debug module 120 collects debug information of the injected traffic. The types of collected information can be, for example, information indicating the types of functions and services that are processed on the injected traffic. In an embodiment where the debug traffic is injected into the network, debug module 120 is also configured to collect debug information such as information of which external network devices processed (e.g., receive or transmit) the debug traffic. Debug module 120 can also collect debug information such as timestamps of when each function and/or service was processed on the debug traffic. In an embodiment where the debug traffic is injected into the network, debug module 120 is also configured to collect debug information such as timestamps of when the external network devices processed (e.g., transmit or receive) the debug traffic.

Debug module 120 may also be configured to collect debug information such as the fate of the injected traffic as it traverses data plane 114 or the network. As used herein, the "fate" of the injected traffic refers to whether the injected traffic was successfully processed by the functions and/or services, and/or whether the injected traffic successfully traverses a network. In some embodiments, there are multiple instances of a single application distributed over multiple service cards, and the incoming traffic for that application is server load balanced over these instances of the application in a uniform manner. For example, services 121 and 122 may be part of the same application. In such embodiments, debug module 120 is also configured to collect the server load balancing decision made by network device 108.

The collected debug information are described herein for illustrative purposes, and not intended to be limitations of the present invention. One with ordinary skill in the art would recognize that other types of debug information can be collected without departing from the broader scope and spirit of the present invention.

As used herein, "collecting" of debug information can refer to debug module 120 actively polling data plane 114 or external network devices for information. Alternatively, or in addition to, "collecting" debug information can refer to data plane 114 or external network devices sending information to debug module 120 without being polled.

In one embodiment, network device 108 is configured to debug its internal functions and services. In such an embodiment, in order to avoid potentially disrupting the network, the injected realistic debug traffic is sent back to debug module 120 at the point where the corresponding simulated traffic would exit network device 108. Alternatively, the injected realistic traffic may simply be dropped by the line card. Alternatively, or in addition to, network device 108 can be configured to debug a network. In such an embodiment, network device 108 is configured to send (e.g., via the line cards) the debug traffic to network devices that are part of a "debugged network", which is described in further details below.

By way of example, Figure 1 illustrates that regular traffic flow 130 has been established between client 101 and 102. For example, traffic flow 130 can originate from client 101 and enters network device 108 via network 103. In this example, traffic flow 130 enters network device 108 via line card 115 and exits network device 108 via line card 116. Traffic flow 130 then travels to its destination (e.g., client 102) via network 104.

Upon entering network device 108, traffic flow 130 is processed by data plane 114, for example, functions 125-126 of line cards 115-116, respectively. As illustrated, traffic flow 130 is also processed by service 121 of service card 111. The path taken (i.e., processing of) traffic flow 130 is illustrated by way of example, and not intended to be a limitation of network device 108.

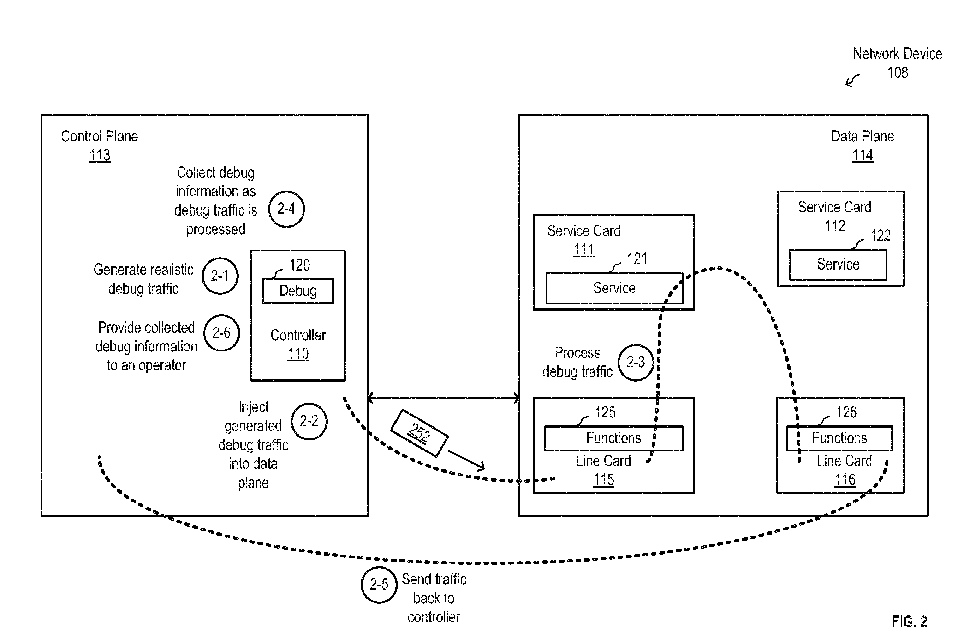

Figure 2 is a process flow diagram illustrating a process flow for performing self-debugging by network device 108 according to one embodiment. In the following description of the transactions illustrated in Figure 2, it is assumed by way of example and not limitation, that network device 108 is attempting to self-debug an internal failure (as opposed to a network failure) associated with traffic flow 130. For example, a customer operating client 101 has reported a failure in connecting to client 102.

Referring now to Figure 2. At transaction 2-1, debug module 120 generates realistic debug traffic 252 to simulate traffic flow 130 originating from an external network device (e.g., client 101). As described above, debug traffic 252 is "realistic" in the sense that it simulates the real/regular traffic flow, containing similar attributes that identify the regular traffic flow. For example, the packet header information of debug traffic 252 contains similar information as regular traffic flow 130 (e.g., same source/destination IP addresses, protocol, port numbers, application header, etc.). In one embodiment, generated debug traffic 252 includes the same packet encapsulations as real traffic flow 130. For example, if real traffic flow 130 passing through network device 108 is encapsulated with Multi-Protocol Label Switching (MPLS) headers, GPRS Tunneling Protocol (GTP) headers, etc., then the injected debug traffic contains the same MPLS and/or GTP headers, etc. In some embodiments, generated debug traffic 252 also contains payload data that simulates the payload in real traffic flow 130. Generating realistic payload information is useful, for example, in debugging whether line cards 115-116 and service cards 111-112 are functioning properly.

By way of example and not limitation, assume that network 103 is a subscriber network and network 104 is the Internet, where upstream traffic refers to traffic originating from the subscriber network and destined for the Internet, and downstream traffic refers to traffic originating from the Internet and destined for the subscriber network. In an embodiment where network device 108 is a Provider Edge (PE) router, the regular upstream traffic entering network device 108 can be a on a Virtual Local Area Network (VLAN) and the regular outgoing upstream traffic from network device 108 destined for the Internet can be encapsulated with an MPLS header. In such an embodiment, the injected debugging upstream traffic from control plane 113 is on the same VLAN as the real/regular upstream traffic, and include realistic IP addresses, etc. Further, higher layer protocols can be realistically simulated by the debug traffic. For example, the debugging traffic on the VLAN with a subscriber IP address can be an HTTP request to a web site (e.g., www.yahoo.com). Similarly, the debugging traffic from control plane 113 on the downstream direction can be encapsulated with realistic headers (e.g., MPLS headers, etc.).

By way of further illustration, in an embodiment where network device 108 is hosting a subscriber management service (e.g., on a line card or a service card), the real/regular upstream traffic entering network device 108 can be encapsulated by a GTP header (e.g., if the service is a mobile subscriber management service), or a Point-to-Point-Over-Ethernet (PPPOE) tunnel header (e.g., if the service is a Digital Subscriber Line (DSL) subscriber management service), and the real/regular traffic exiting network device 108 in the upstream direction can be plain IP traffic. In such an embodiment, the debugging traffic injected for the upstream direction can be either GTP or PPPOE traffic with the appropriate header information. For the downstream direction, the injected traffic can be plain IP traffic. According to one embodiment, the IP address of the debugging traffic is a real subscriber IP address. In an alternate embodiment, the IP address of the debugging traffic is a fake subscriber IP address. In such an embodiment, the operator can generate these fake subscriber IP traffic and send the generated debugging traffic to the services running on network device 108 to determine whether the services are executing properly.

By way of further illustration, network device 108 can be a Provider (P) router, where the upstream and downstream traffic passing through network device 108 are IP packets encapsulated with MPLS headers. In such an embodiment, control plane 113 injects upstream and downstream debugging traffic using the same IP traffic encapsulated with the same MPLS headers as the real/regular upstream and downstream traffic would be.

In one embodiment, debug module 120 is configured to generate debug traffic that realistically simulates real traffic flows by using information in routing structures (e.g., Routing Information Base (RIB), Label Information Base (LIB), one or more adjacency structures) maintained by control plane 113. Alternatively, or in addition to, debug module 120 generates debug traffic that realistically simulates traffic flows by using information of one or more forwarding structures (e.g., Forwarding Information Base (FIB), Label Forwarding Information Base (LFIB), and one or more adjacency structures) maintained by data plane 114.

In one embodiment, debug module 120 is configured to generate debug traffic that realistically simulates real traffic flows by monitoring real/regular traffic flowing through data plane 114. Information of the real traffic flows can be collected by debug module 120, and based on the empirical data, debug module 120 generates the debug traffic. For example, debug module 120 can monitor real traffic flow 130 flowing through data plane 114, and based on the observed traffic, generates realistic debug traffic 252 (e.g., using the same header information and/or payload information, etc.). In yet another embodiment, debug module 120 generates realistic debug traffic based on information provided by an operator. The mechanisms discussed herein for generating debug traffic are not mutually exclusive, and can be used in any combination thereof.

In one embodiment, debug module 120 tags/marks generated debug traffic 252 with predetermined information to indicate that the generated traffic is for debug purposes. In one such embodiment, debug module 120 marks debug traffic 252 with predetermined information in the header of each packet of debug traffic 252. Alternatively, or in addition to, debug module 120 marks each packet of debug traffic 252 with predetermined information in the payload portion of the packet. One having ordinary skill in the art would recognize that the "header" and "payload" portion of a packet varies, depending on the level of encapsulation.

Referring still to Figure 2. At transaction 2-2, debug module 120 injects generated debug traffic 252 into data plane 114 such that the injected debug traffic appears to data plane 114 as if it originated from an external network device (e.g., client 101). As illustrated, debug traffic 252 appears as real/regular traffic entering data plane 114 via line card 115 (e.g., similar to how simulated traffic flow 130 enters data plane 114).

At transaction 2-3, data plane 114 processes debug traffic 252 as simulated traffic flow 130 would be processed. Debug traffic 252 is shown as being processed by functions 125 of line card 115, service 121 of service card 111, and functions 126 of line card 116. Note that debug traffic 252 traverses data plane 114 in the same path that the simulated traffic flow 130 would traverse. In other words, realistic debug traffic 252 and corresponding simulated traffic flow 130 are processed by the same functions and services of data plane 114.

At transaction 2-4, debug module 120 collects debug information of debug traffic 252 as it is processed by data plane 114. The types of collected debug information can be, for example, information indicating the types of functions (e.g., functions 125-126 of line cards 115-116, respectively) and services (e.g., services 121-122 of service cards 111-112) that are applied to the injected traffic. Debug module 120 can also collect debug information such as timestamps of when each function and/or service was applied to the debug traffic. Debug module 120 may also be configured to collect debug information such as the fate of the injected traffic as it traverses data plane 114. Here, the fate of the injected traffic refers to whether the functions and/or services were successfully executed (i.e., applied to the injected traffic).

In one embodiment, the collected debug information includes information relating to which port of which line card the debug traffic was received at. The collected debug information can also be information indicating which Access Control List (ACL) rule and/or which Forwarding Information Base (FIB) entry the injected debug traffic hit. In one embodiment, the collected debug information can be information indicating which link/port the debug traffic is destined for, and which Link Aggregation Group (LAG) and/or Equal Cost Multi-Path (ECMP) link group it belongs to. The collected debug information can also be information indicating which Quality of Service (QoS) the debug traffic belongs to.

The collection of debug information is illustrated as being performed in one transaction (i.e., transaction 2-4) in order not to obscure the invention. One having ordinary skill in the art would recognize that the debug information can be collected as part of multiple transactions/operations. For example, as debug traffic 252 is processed by each portion of a path (e.g., function and/or service) of data plane 114, debug information can be collected.

In one embodiment, network device 108 is configured to self-debug its internal functions and services rather than debug the network to which network device 108 is coupled. In such an embodiment, at the point where simulated traffic flow 130 would exit network device 108, the corresponding line card sends the debug traffic back to control plane 113 instead of sending the debug traffic to an external network device. In one such embodiment, at transaction 2-5, data plane 114 sends debug traffic 252 back to control plane 113. By sending the debug traffic back to control plane 113, data plane 114 avoids potentially disrupting the rest of the network, for example, because the debug traffic may appear as a Denial of Service (DoS) attack. In an alternate embodiment, instead of sending the debug traffic back to control plane 113, data plane 114 can simply drop the debug traffic.

In a typical network configuration, there is vast amount of traffic flowing through a network device such as network device 108. Collecting debug information for all packets of all traffic flows through a network device would severely impair network performance. In one embodiment, network device 108 of the present invention overcomes this limitation by collecting debug information only on packets that have been marked as debug traffic. In one such embodiment, network device 108 (e.g., debug module 120) can further be configured to collect debug information for only a subset of the debug traffic. For example, network device 108 can be configured to collect debug information for only a percentage (e.g., 10%) of the debug traffic over a configurable period of time. In one embodiment, the percentage and the time period can be configured for each traffic flow. Alternatively, the percentage and/or the time period can be globally applied to all traffic flows that flow through data plane 114.

At transaction 2-6, debug module 120 provides the collected debug information (e.g., to an operator). In one embodiment, as part of transaction 2-6, debug module 120 can intelligently mine the collected debug information and predict where the failure occurred and/or where the bottlenecks within network device 108 may be. By way of example, if debug traffic 252 was successfully processed by function 125, but fails to be processed by service 121, debug module 120 can conclude that there is a problem within service card 111. By way of further illustration, debug module 120 can analyze the timestamps of when the debugging traffic was processed by each of the functions/processes, and based, for example, on the differences between the timestamps, determine the bottlenecks of network device 108. By way of further illustration, if the debugging traffic is to simulate security attack traffic, the timestamps and fate of the debugging traffic can also be processed by debug module 120 to determine whether network device 108 can safely operate under the simulated security attack.

The self-debugging mechanisms described above can be deployed in several scenarios. For example, the self-debugging mechanisms can be used to identify which link of a Link Aggregation Group (LAG) a traffic flow went through, which Virtual Routing Function (VRF) it belongs to, which Quality of Service (QoS) queue it entered, where the traffic flow was dropped within the network device, etc. The above described mechanisms can also be deployed to check the performance of a network device. For example, by analyzing the collected timestamps, network device 108 can determine which path of data plane 114 is the bottleneck. The self-debugging mechanisms can also be used to perform network security checks. For example, debug module 120 can be configured to generate debug traffic that simulates a DoS attack in order to determine if network device 108 behaves as expected. The security-probing traffic can be more effectively and efficiently generated when a triggering traffic is utilized by control plane 113 to data plane 114. Only a small amount of triggering traffic is required to initiate a prescribed amount of DoS traffic in the prescribed set of forwarding elements (e.g. line cards). In this way, the amount of debugging traffic between control plane 113 and data plane 114 can be greatly reduced.

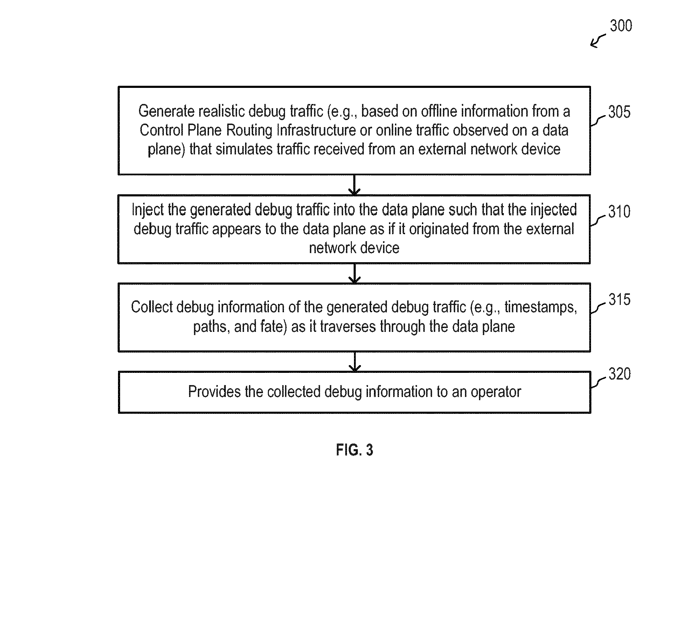

Figure 3 is a flow diagram illustrating method 300 for self-debugging by a network device according to one embodiment. For example, method 300 can be performed by debug module 120, which can be implemented as software, firmware, hardware, or any combination thereof. Referring now to Figure 3, at block 305, the debug module generates realistic debug traffic (e.g., based on offline information from a control plane routing infrastructure or online traffic observed on a data plane) that simulates traffic received from an external network device, for example, as part of transaction 2-1.

At block 310, the debug module injects the generated debug traffic into the data plane such that the injected debug traffic appears to the data plane as if it originated from the external network device (e.g., as part of transaction 2-2). At block 315, the debug module collects debug information of the generated debug traffic (e.g., timestamps, paths, and fate) as it traverses through the data plane (e.g., as part of transaction 2-4). At block 320, the debug module provides the collected debug information to an operator (e.g., as part of transaction 2-6).

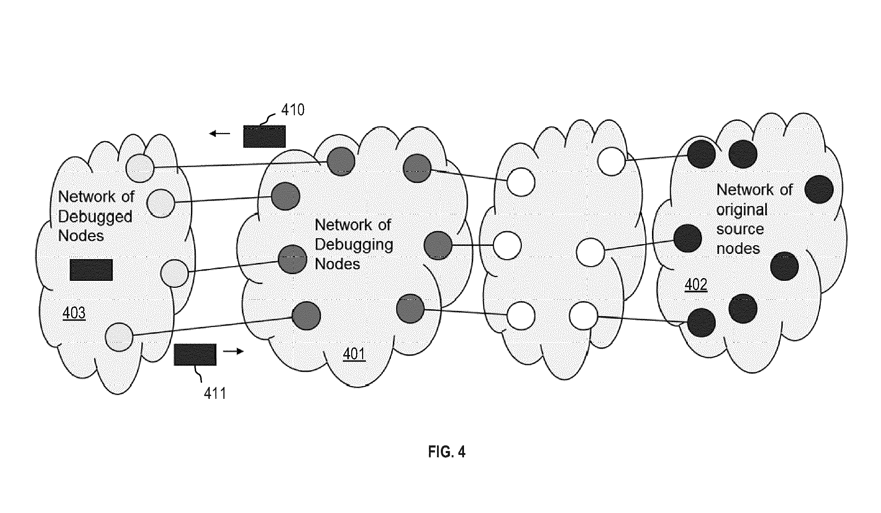

In one embodiment, one or more of network device 108 can be configured to debug a network that it couples to. Figure 4 is a block diagram illustrating network 401 communicatively coupled to networks 402 and 403. Network 401 includes one or more debugging nodes for debugging network 403, which includes one or more debugged nodes. Each of debugging nodes of network 401 can be implemented as network device 108, configured to individually or collaboratively debug network 103. As used herein, debugging a network refers to the trouble shooting of not only the debugged nodes, but also all the logical/physical links between them. For example, debugging nodes of network 401 can be configured to generate realistic debug traffic 410 that simulates traffic from original source nodes of network 402. Realistic debug traffic 410 is then injected into network 403, which processes the debug traffic and returns the traffic as part of debug traffic 411. One having ordinary skill in the art would recognize that the debugging nodes of network 401 are logically grouped together, but they can be physically dispersed. The same can be said of networks 402-403.

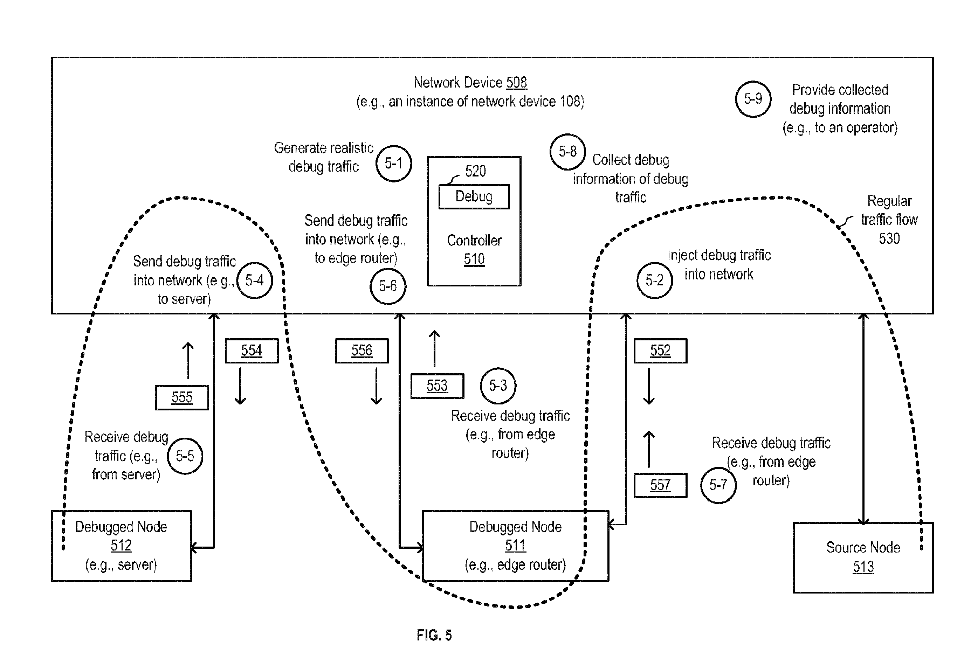

Figure 5 is a process flow diagram illustrating a process flow for performing network debugging by network device 508 according to one embodiment. Network device 508 can be implemented as part of network device 108. Thus, for example, controller 510 and debug module 520 can be implemented as part of controller 110 and debug module 120, respectively. Certain details of network device 508 have been omitted, however, in order to avoid obscuring the invention. By way of example, network device 508 can be one of the debugging nodes of debugging network 401. Debugged nodes 511-512 can be the debugged nodes of debugged network 403. Source node 513 can be a source node of network 402.

In the following description of the transactions illustrated in Figure 5, it is assumed by way of example and not limitation, that network device 508 is attempting to debug a failure associated with traffic flow 530 that flows between source node 513 and debugged node 512 via network device 508 and debugged node 511. For example, source node 513 may be experiencing a problem connecting to debugged node 512. Network devices 511-512 are referred to as "debugged nodes" because these nodes (and/or their connections) may have a network problem that is impairing traffic flow 530. Thus, network devices 511-512 are the nodes that need to be debugged by network device 508. In one embodiment, network device 508 has been configured with information indicating which nodes in the network are classified as "debugged nodes". Source node 513 and debugged nodes 511-512 can be any type of networking devices, including for example, but not limited to, servers, edge routers, blades, subscriber client devices, etc.

Referring now to Figure 5. At transaction 5-1, network device 508 (e.g., debug module 520) generates realistic debug traffic using mechanisms similar to those described above. For the sake of brevity, the mechanisms for generating realistic debug traffic will not be reiterated here. In this example, the debug traffic is "realistic" in the sense that it simulates traffic flow 530 originating from source node 513. Thus, the generated debug traffic would traverse network paths similar to simulated traffic flow 530.

At transaction 5-2, network device 508 injects generated debug traffic 552 into the network (e.g., to debugged node 511). For example, debug traffic 552 can be injected to debugged node 511 via a line card (not shown) of network device 508, such that injected debug traffic 552 appears to debugged node 511 as if it originated from source node 513.

At transaction 5-3, network device 508 receives debug traffic 553 from the network (e.g., from debugged node 511). Debug traffic 553 is associated with debug traffic 552. For example, debug traffic 553 can be the same as debug traffic 552. Debug traffic 553, however, does not have to be the same as debug traffic 552. For example, debug traffic 553 may be the result of debug traffic 552 after it has been processed by debugged node 511. It shall be appreciated that debug traffic 553 does not have to be received directly from debugged node 511. For example, debugged node 511 can receive debug traffic 552, process and forward it to another network device (not shown), which can apply further processing, and send the resulting debug traffic 553 to network device 508. In other words, the path taken by debug traffic 552 to end up as debug traffic 553 can be much more complicated than as shown. In order to avoid obscuring the invention, however, such details have been omitted.

At transaction 5-4, network device 508 injects debug traffic 554 into the network (e.g., to debugged node 512). For example, debug traffic 554 can be injected to debugged node 512 via a line card (not shown) of network device 508, such that injected debug traffic 554 appears to debugged node 512 as if it originated from source node 513. Debug traffic 554 is associated with debug traffic 553. For example, debug traffic 554 can be the same as debug traffic 553. Debug traffic 554, however, does not have to be the same as debug traffic 553. For example, debug traffic 554 may be the result of debug traffic 553 after it has been processed by the data plane of network device 508.

At transaction 5-5, network device 508 receives debug traffic 555 from the network (e.g., from debugged node 512). Debug traffic 555 is associated with debug traffic 554. For example, debug traffic 555 can be the same as debug traffic 554. Debug traffic 555, however, does not have to be the same as debug traffic 554. For example, debug traffic 555 may be the result of debug traffic 554 after it has been processed by debugged node 512. It shall be appreciated that debug traffic 555 does not have to be received directly from debugged node 512. For example, debugged node 512 can receive debug traffic 554, process and forward it to another network device (not shown), which can apply further processing, and send the resulting debug traffic 555 to network device 508. In other words, the path taken by debug traffic 554 to end up as debug traffic 555 can be much more complicated than as shown. In order to avoid obscuring the invention, however, such details have been omitted.

At transaction 5-6, network device 508 injects debug traffic 556 into the network (e.g., to debugged node 511). For example, debug traffic 556 can be injected to debugged node 511 via a line card (not shown) of network device 508, such that injected debug traffic 556 appears to debugged node 511 as if it originated from source node 513. Debug traffic 556 is associated with debug traffic 555. For example, debug traffic 556 can be the same as debug traffic 555. Debug traffic 556, however, does not have to be the same as debug traffic 555. For example, debug traffic 556 may be the result of debug traffic 555 after it has been processed by the data plane of network device 508.

At transaction 5-7, network device 508 receives debug traffic 557 from the network (e.g., from debugged node 511). Debug traffic 557 is associated with debug traffic 556. For example, debug traffic 557 can be the same as debug traffic 556. Debug traffic 557, however, does not have to be the same as debug traffic 556. For example, debug traffic 557 may be the result of debug traffic 556 after it has been processed by debugged node 511. It shall be appreciated that debug traffic 557 does not have to be received directly from debugged node 511. For example, debugged node 511 can receive debug traffic 556, process and forward it to another network device (not shown), which can apply further processing, and send the resulting debug traffic 557 to network device 508. In other words, the path taken by debug traffic 556 to end up as debug traffic 557 can be much more complicated than as shown. In order to avoid obscuring the invention, however, such details have been omitted.

At transaction 5-8, network device 508 collects debug information of the debug traffic as it exits and enters the data plane of network device 508. The types of debug information collected can be similar, but not limited, to those described above with respect to transaction 2-4. For example, network device 508 can collect debug information regarding which line cards (e.g., port numbers) of network device 508 the debug traffic enters through and exits from. The debug information can also include information of which port of the external network device the debug traffic was received from. In one embodiment, the debug information also includes information of which port of the external network device the debug traffic was sent to. The debug information can include timestamps of when the debug traffic enters and exits network device 508. In one embodiment, the debug information can also include the fate of the debug traffic. Here, the fate of the debug traffic refers to whether the debug traffic was successfully processed by each node (e.g., debugged nodes 511-512) within the network(s).

The collection of debug information is illustrated as being performed in one transaction (i.e., transaction 5-8) in order not to obscure the invention. One having ordinary skill in the art would recognize that the debug information can be collected as part of multiple transactions/operations. For example, as debug traffic 552-557 exits and enters network device 508, debug information can be collected.

In one embodiment, network device 508 is configured to debug nodes that have been classified as "debugged nodes" (e.g., debugged nodes 511-512). In such an embodiment, network device 508 is configured to not send debugged traffic to a network device that is not classified as a "debugged node". For example, after receiving debug traffic 557, if network device 508 determines that it needs to be forwarded to source node 513 (which has not been classified as a "debugged node"), network device 508 would send the debug traffic back to its control plane for further debug processing, or simply drop the debug traffic without sending it to source node 513. By not sending the debug traffic back to source node 513, network device 508 avoids potentially disrupting the rest of the network. For example, the debug traffic may appear as a Denial of Service (DoS) attack to the rest of the network, thus potentially raising false alerts.

In a typical network configuration, there is vast amount of traffic flowing through a network device such as network device 508. Collecting debug information for all packets of all traffic flows through a network device would severely impair network performance. In one embodiment, network device 508 of the present invention overcomes this limitation by collecting debug information only on packets that have been marked as debug traffic. Debug traffic can be marked using mechanisms similar to those described above.

At transaction 5-9, network device 508 provides the collected debug information (e.g., to an operator). In one embodiment, as part of transaction 5-9, network device 508 can intelligently mine the collected debug information and predict where the failure occurred and/or where the bottlenecks within network may be. For example, if transactions 5-1 through 5-6 are successfully performed, but transaction 5-7 is not successfully performed (i.e., debug traffic 557 is missing), network device 508 can determine that there is a problem with debugged node 511. By way of further illustration, network device 508 can analyze the timestamps of when the debugging traffic entered and exit each of the debugged nodes (e.g., timestamps of the transactions), and based, for example, on the differences between the timestamps, determine the bottlenecks of network. By way of further illustration, if the debugging traffic is to simulate security attack traffic, the timestamps and fate of the debugging traffic can also be processed by network device 508 to determine whether the network can safely operate under the simulated security attack.

The mechanisms for debugging a network has been described above with respect to traffic flow 530. One having ordinary skill in the art would, however, recognize that the present invention is not limited to debugging any particular traffic flow from any particular network device in any particular network configuration. The present debugging mechanisms, for example, are equally applicable in network configurations involving more or less network devices. Further, it shall be appreciated that source nodes (e.g., source node 513) and debugged nodes (e.g., debugged nodes 512-513) do not have to be directly connected to network device 508. These nodes, for example, can be communicatively coupled to network device 508 via one or more other networks.

The mechanisms for debugging a network have been described above with respect to a "debugged network" comprising of two debugged nodes (i.e., debugged nodes 511and 512). It shall be appreciated, however, that the present invention is not so limited. One having ordinary skill in the art would recognize that the present invention can be extended to more or less debugged nodes.

The mechanisms for debugging a network have been described above with respect to a "debugging network" comprising of one debugging network device (i.e., network device 508). It shall be appreciated, however, that the present invention is not so limited. One having ordinary skill in the art would recognize that the present invention can be extended to two or more debugging network devices collaborating with each other in order to debug a network. By collaborating with each other, the debugging network devices of the present invention can debug a much broader scope of networks.

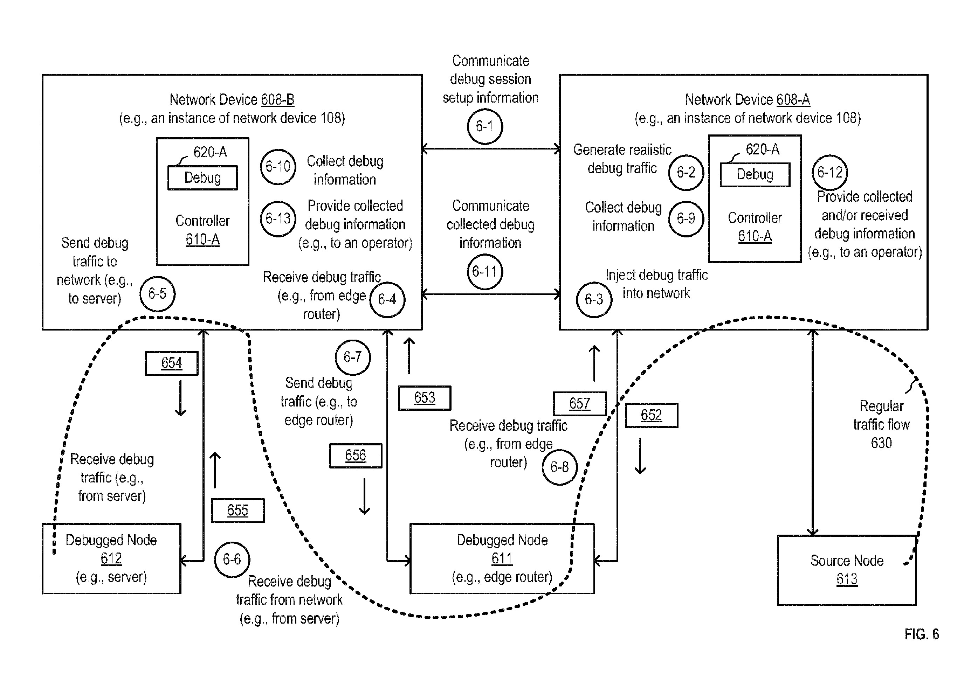

Figure 6 is a process flow diagram illustrating a process flow for performing network debugging by network devices 608-A and 608-B according to one embodiment. Each of network devices 608-A and 608-B can be implemented as part of network device 108. Thus, for example, controllers 610-A and 610-B can be implemented as part of controller 110, and debug modules 620-A and 620-B can be implemented as part of debug module 120. Certain details of network devices 608-A and 608-B have been omitted, however, in order to avoid obscuring the invention. Network devices 608-A and 608-B are herein collectively referred to as network devices 608.

In the following description of the transactions illustrated in Figure 6, it is assumed by way of example and not limitation, that network devices 608 are attempting to debug a failure associated with traffic flow 630 that flows between source node 613 and debugged node 612 via network devices 608 and debugged node 611. For example, source node 613 may be experiencing a problem connecting to debugged node 612. Network devices 611-612 are referred to as "debugged nodes" because these nodes (and/or their connections) may have a network problem that is impairing traffic flow 630. Thus, network devices 611-612 are the nodes that need to be debugged by network devices 608. Source node 613 and debugged nodes 611-612 can be any type of networking devices, including for example, but not limited to, servers, edge routers, blades, subscriber client devices, etc.

Referring now to Figure 6. At transaction 6-1, network devices 608-A and 608-B communicate with each other information for setting up a debug session. In one embodiment, the debug setup information includes information indicating the type of debug traffic that is to be generated (e.g., by network device 608-A) and received (e.g., by network device 608-B). Network devices 608-A and 608-B can also exchange debug session setup information indicating when the debug traffic are to be generated and received. In one embodiment, the exchanged debug session setup information can also include information indicating which port the debug traffic is to be transmitted and/or received from. For example, network device 608-A may communicate information to network device 608-B indicating which port network device 608-A intends to transmit the debug traffic from, and which port network device 608-B should receive the debug traffic through.

At transaction 6-2, network device 608-A (e.g., debug module 620-A) generates realistic debug traffic using mechanisms similar to those described above. For the sake of brevity, the mechanisms for generating realistic debug traffic will not be reiterated here. In this example, the debug traffic is realistic in the sense that it simulates real/regular traffic flow 630 originating from source node 613. Thus, the generated debug traffic would traverse network paths similar to simulated traffic flow 630.

At transaction 6-3, network device 608-A injects generated debug traffic 652 into the network (e.g., to debugged node 611). For example, debug traffic 652 can be injected to debugged node 611 via a line card (not shown) of network device 608-A, such that injected debug traffic 652 appears to debugged node 611 as if it originated from source node 613.

At transaction 6-4, network device 608-B receives debug traffic 653 from the network (e.g., from debugged node 611). Debug traffic 653 is associated with debug traffic 652. For example, debug traffic 653 can be the same as debug traffic 652. Debug traffic 653, however, does not have to be the same as debug traffic 652. For example, debug traffic 653 may be the result of debug traffic 652 after it has been processed by debugged node 611. It shall be appreciated that debug traffic 653 does not have to be received directly from debugged node 611. For example, debugged node 611 can receive debug traffic 652, process and forward it to another network device (not shown), which can apply further processing, and send the resulting debug traffic 653 to network device 608-B. In other words, the path taken by debug traffic 652 to end up as debug traffic 653 can be much more complicated than as shown. In order to avoid obscuring the invention, however, such details have been omitted.

At transaction 6-5, network device 608-B injects debug traffic 654 into the network (e.g., to debugged node 612). For example, debug traffic 654 can be injected to debugged node 612 via a line card (not shown) of network device 608-B, such that injected debug traffic 654 appears to debugged node 612 as if it originated from source node 613. Debug traffic 654 is associated with debug traffic 653. For example, debug traffic 654 can be the same as debug traffic 653. Debug traffic 654, however, does not have to be the same as debug traffic 653. For example, debug traffic 654 may be the result of debug traffic 653 after it has been processed by the data plane of network device 608-B.

At transaction 6-6, network device 608-B receives debug traffic 655 from the network (e.g., from debugged node 612). Debug traffic 655 is associated with debug traffic 654. For example, debug traffic 655 can be the same as debug traffic 654. Debug traffic 655, however, does not have to be the same as debug traffic 654. For example, debug traffic 655 may be the result of debug traffic 654 after it has been processed by debugged node 612. It shall be appreciated that debug traffic 655 does not have to be received directly from debugged node 612. For example, debugged node 612 can receive debug traffic 654, process and forward it to another network device (not shown), which can apply further processing, and send the resulting debug traffic 655 to network device 608-B. In other words, the path taken by debug traffic 654 to end up as debug traffic 655 can be much more complicated than as shown. In order to avoid obscuring the invention, however, such details have been omitted.

At transaction 6-7, network device 608-B injects debug traffic 656 into the network (e.g., to debugged node 611). For example, debug traffic 656 can be injected to debugged node 611 via a line card (not shown) of network device 608-B, such that injected debug traffic 656 appears to debugged node 611 as if it originated from source node 613. Debug traffic 656 is associated with debug traffic 655. For example, debug traffic 656 can be the same as debug traffic 655. Debug traffic 656, however, does not have to be the same as debug traffic 655. For example, debug traffic 656 may be the result of debug traffic 655 after it has been processed by the data plane of network device 608-B.

At transaction 6-8, network device 608-A receives debug traffic 657 from the network (e.g., from debugged node 611). Debug traffic 657 is associated with debug traffic 656. For example, debug traffic 657 can be the same as debug traffic 656. Debug traffic 657, however, does not have to be the same as debug traffic 656. For example, debug traffic 657 may be the result of debug traffic 656 after it has been processed by debugged node 611. It shall be appreciated that debug traffic 657 does not have to be received directly from debugged node 611. For example, debugged node 611 can receive debug traffic 656, process and forward it to another network device (not shown), which can apply further processing, and send the resulting debug traffic 657 to network device 608-A. In other words, the path taken by debug traffic 656 to end up as debug traffic 657 can be much more complicated than as shown. In order to avoid obscuring the invention, however, such details have been omitted.

At transactions 6-9 and 6-10, network devices 608 collect debug information of the debug traffic as it exits and enters the data plane of network devices 608. The types of debug information collected can be similar, but not limited, to those described above with respect to transaction 2-4. For example, network devices 608 can collect debug information regarding which line cards (e.g., port numbers) of network devices 608 the debug traffic enters through and exits from. The debug information can also include information of which port of the external network device the debug traffic was received from. In one embodiment, the debug information also includes information of which port of the external network device the debug traffic was sent to. The debug information can include timestamps of when the debug traffic enters and exits network devices 608. In one embodiment, the debug information can also include the fate of the debug traffic. Here, the fate of the debug traffic refers to whether the debug traffic was successfully processed by each node (e.g., debugged nodes 611-612) within the network(s).

The collection of debug information is illustrated as being performed in one transaction by each of network devices 608 (i.e., transactions 6-9 and 6-10) in order not to obscure the invention. One having ordinary skill in the art would recognize that the debug information can be collected as part of multiple transactions/operations by each device. For example, as debug traffic 652-657 exits and enters network devices 608, debug information can be collected.

In one embodiment, network devices 608 are configured to debug nodes that have been classified as "debugged nodes" (e.g., debugged nodes 611-612). In one such embodiment, network devices 608 have been configured with information indicating which nodes in the network are classified as "debugged nodes". In such an embodiment, network devices 608 are configured to not send debugged traffic to a network device that is not classified as a "debugged node". For example, after receiving debug traffic 657, if network device 608-A determines that it needs to be forwarded to source node 613, network device 608-A would send the debug traffic back to its control plane for further debug processing, or simply drop the debug traffic without sending it to source node 613. By not sending the debug traffic back to source node 613, network device 608-A avoids potentially disrupting the rest of the network. For example, the debug traffic may appear as a Denial of Service (DoS) attack to the rest of the network, thus potentially raising false alerts.

In a typical network configuration, there is vast amount of traffic flowing through a network device such as network device 608-A and/or 608-B. Collecting debug information for all packets of all traffic flows through a network device would severely impair network performance. In one embodiment, network devices 608 of the present invention overcome this limitation by collecting debug information only on packets that have been marked as debug traffic. Debug traffic can be marked using mechanisms similar to those described above.

In one embodiment, network devices 608 are configured to exchange the collected debug information with each other. In such an embodiment, at transaction 6-11, network devices 608 exchange the debug information collected as part of transactions 6-9 and 6-10 with each other. In one embodiment, network devices 608 are configured such that the collected debug information are exchanged between all debugging network devices (in this example, both network devices 608). In an alternate embodiment, only a subset of debugging network devices are configured to send the collected debug information. For example, network device 608-B can be configured to send the collected debug information to network device 608-A, while network device 608-A is configured to not send the collected debug information to network device 608-B. According to one embodiment, the amount/type of debug information to be sent is configurable at each of network devices 608. For example, the debug information sent from network device 608-A to network device 608-B can be different from the debug information that is sent by network device 608-B to network device 608-A.

At transactions 6-12 and 6-13, network devices 608 provide the collected debug information (e.g., to an operator). In one embodiment, as part of transactions 6-12 and 6-13, network devices 608 can intelligently mine the collected debug information and predict where the failure occurred and/or where the bottlenecks within network may be. For example, if transactions 6-2 through 6-7 are successfully performed but transaction 6-8 is not successfully performed (i.e., debug traffic 657 is missing), network device 608-A can determine that there is a problem with debugged node 611. By way of further illustration, network device 608-A and/or 608-B can analyze the timestamps of when the debugging traffic entered and exit each of the debugged nodes (e.g., timestamps of the transactions), and based, for example, on the differences between the timestamps, determine the bottlenecks of network. By way of further illustration, if the debugging traffic is to simulate security attack traffic, the timestamps and fate of the debugging traffic can also be processed by network device 608-A and/or 608-B to determine whether the network can safely operate under the simulated security attack.

In one embodiment, each of network devices 608 can be individually configured to either provide or not provide the collected debug information to an operator. According to one embodiment, the amount/type of debug information to be provided to an operator is configurable at each of network devices 608. For example, the debug information provided by network device 608-A can be different from the debug information that is provided by network device 608-B.

The mechanisms for collaboratively debugging a network have been described above with respect to traffic flow 630. One having ordinary skill in the art would, however, recognize that the present invention is not limited to debugging any particular traffic flow from any particular network device in any particular network configuration. The present debugging mechanisms, for example, are equally applicable in network configurations involving more or less network devices. Further, it shall be appreciated that source nodes (e.g., source node 613) and debugged nodes (e.g., debugged nodes 612-613) do not have to be directly connected to network devices 608. These nodes, for example, can be communicatively coupled to network devices 608 via one or more other networks.

The mechanisms for collaboratively debugging a network have been described above with respect to a "debugged network" comprising of two debugged nodes (i.e., debugged nodes 611and 612). It shall be appreciated, however, that the present invention is not so limited. One having ordinary skill in the art would recognize that the present invention can be extended to more or less debugged nodes.

The mechanisms for collaboratively debugging a network have been described above with respect to a "debugging network" comprising of two debugging network devices (i.e., network devices 608-A and 608-B). It shall be appreciated, however, that the present invention is not so limited. One having ordinary skill in the art would recognize that the present invention can be extended to three or more debugging network devices collaborating with each other in order to debug a network.

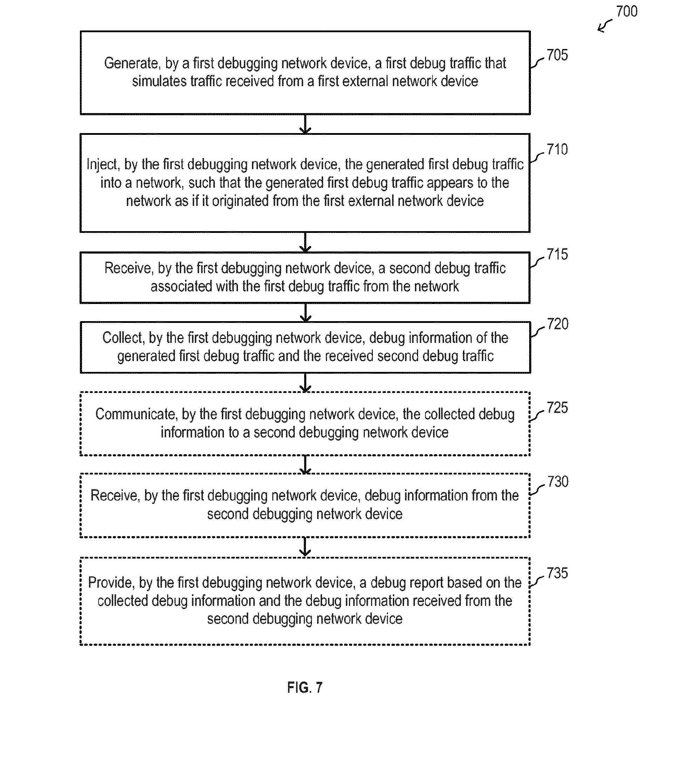

Figure 7 is a flow diagram illustrating method 700 for debugging a network according to one embodiment. For example, method 700 can be performed by a first debugging network device such as network device 608-A, which can be implemented in software, firmware, hardware, or any combination thereof. Method 700 assumes that some or all of the operations of method 800 (described below) have been performed or are concurrently performed. Referring now to Figure 7, at block 705, the first debugging network device generates a first debug traffic (e.g., debug traffic 652) that simulates traffic received from a first external network device (e.g., source node 613).

At block 710, the first debugging network device injects the generated first debug traffic into a network (e.g., to debugged node 611), such that the generated first debug traffic appears to the network as if it originated from the first external network device. At block 715, the first debugging network device receives a second debug traffic (e.g., debug traffic 657) associated with the first debug traffic from the network.

At block 720, the first network device collects debug information (e.g., as part of transaction 6-9) of the generated first debug traffic and the received second debug traffic. At block 725, the first debugging network device optionally communicates the collected debug information (e.g., as part of transaction 6-11) to a second debugging network device (e.g., network device 608-B).

At block 730, the first debugging network device optionally receives debug information (e.g., as part of transaction 6-11) from the second debugging network device. At block 735, the first debugging network device optionally provides a debug report (e.g., as part of transaction 6-12) based on the collected debug information and the debug information received from the second debugging network device.

Method 700 has been described above as a sequence of operations for illustrative purposes. One having ordinary skill in the art would recognize that the operations can be performed in one or more different sequences without departing from the broader scope and spirit of the present invention.

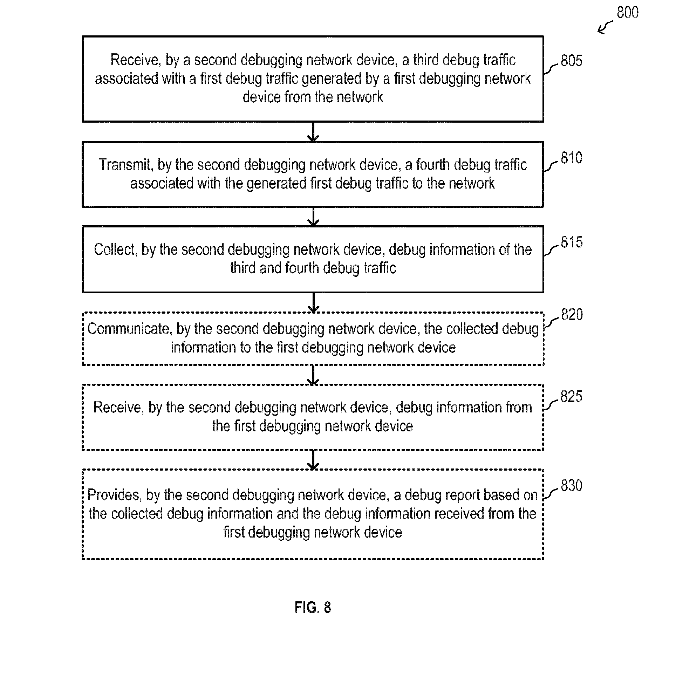

Figure 8 is a flow diagram illustrating method 800 for debugging a network according to one embodiment. For example, method 800 can be performed by a second debugging network device such as network device 608-B, which can be implemented in software, firmware, hardware, or any combination thereof. Method 800 assumes that some or all of the operations of method 700 have been performed or are concurrently performed. Referring now to Figure 8, at block 805, the second debugging network device receives a third debug traffic (e.g., debug traffic 653) associated with a first debug traffic generated by a first debugging network device from the network.

At block 810, the second debugging network device transmits a fourth debug traffic (e.g., debug traffic 654) associated with the generated first debug traffic to the network. At block 815, the second debugging network device collects debug information of the third and fourth debug traffic. At block 820, the second debugging network device optionally communicates the collected debug information to the first debugging network device (e.g., as part of transaction 6-11). At block 825, the second debugging network device optionally receives debug information from the first debugging network device (e.g., as part of transaction 6-11). At block 830, the second debugging network device optionally generates a debug report based on the collected debug information and the debug information received from the first debugging network device (e.g., as part of transaction 6-13).

Method 800 has been described above as a sequence of operations for illustrative purposes. One having ordinary skill in the art would recognize that the operations can be performed in one or more different sequences without departing from the broader scope and spirit of the present invention.

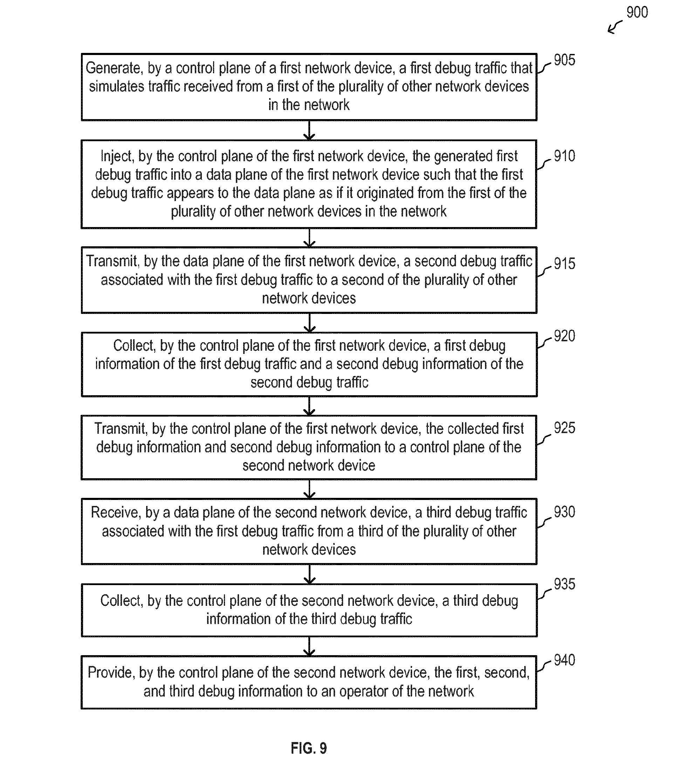

Figure 9 is a flow diagram illustrating method 900 for debugging a network according to one embodiment. For example, method 900 can be performed by a first network device such as network device 608-A and a second network device such as network device 608-B, either or both of which can be implemented in software, firmware, hardware, or any combination thereof. Referring now to Figure 9, at block 905, the control plane (e.g., control plane 113) of the first network device generates a first debug traffic (e.g., debug traffic 252) that simulates traffic received from a first of the plurality of other network devices in the network (e.g., source node 613).

At block 910, the control plane of the first network device injects (e.g., as part of transaction 2-2) the generated first debug traffic (e.g., debug traffic 252) into a data plane (e.g., data plane 114) of the first network device such that the first debug traffic appears to the data plane as if it originated from the first of the plurality of other network devices in the network. At block 915, the data plane of the first network device transmits (e.g., as part of transaction 6-3) a second debug traffic (e.g., debug traffic 652) associated with the first debug traffic to a second of the plurality of other network devices (e.g., debugged node 611).

At block 920, the control plane of the first network device collects (e.g., as part of transaction 6-9) a first debug information of the first debug traffic and a second debug information of the second debug traffic. At block 925, the control plane of the first network device transmits (e.g., as part of transaction 6-11) the collected first debug information and second debug information to a control plane of the second network device.

At block 930, a data plane of the second network device receives (e.g., as part transaction 6-4) a third debug traffic (e.g., debug traffic 653) associated with the first debug traffic from a third of the plurality of other network devices (e.g., debugged node 611). At block 935, the control plane of the second network device collects (e.g., as part of transaction 6-10) a third debug information of the third debug traffic. At block 940, the control plane of the second network device provides (e.g., as part transaction 6-13) the first, second, and third debug information to an operator of the network.

Some portions of the preceding detailed descriptions have been presented in terms of algorithms and symbolic representations of transactions on data bits within a computer memory. These algorithmic descriptions and representations are the ways used by those skilled in the data processing arts to most effectively convey the substance of their work to others skilled in the art. An algorithm is here, and generally, conceived to be a self-consistent sequence of transactions leading to a desired result. The transactions are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the above discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The algorithms and displays presented herein are not inherently related to any particular computer or other apparatus. Various general-purpose systems may be used with programs in accordance with the teachings herein, or it may prove convenient to construct more specialized apparatus to perform the required method transactions. The required structure for a variety of these systems will appear from the description above. In addition, embodiments of the present invention are not described with reference to any particular programming language. It will be appreciated that a variety of programming languages may be used to implement the teachings of embodiments of the invention as described herein.

In the foregoing specification, embodiments of the invention have been described with reference to specific exemplary embodiments thereof. It will be evident that various modifications may be made thereto without departing from the broader spirit and scope of the invention as set forth in the following claims. The specification and drawings are, accordingly, to be regarded in an illustrative sense rather than a restrictive sense.

Throughout the description, embodiments of the present invention have been presented through flow diagrams. It will be appreciated that the order of transactions and transactions described in these flow diagrams are only intended for illustrative purposes and not intended as a limitation of the present invention. One having ordinary skill in the art would recognize that variations can be made to the flow diagrams without departing from the broader spirit and scope of the invention as set forth in the following claims.

## Claims

1. A method for self-debugging of a network comprising a first network device (608-A) communicatively coupled to a second network device (608-B), wherein the first network device and the second network device are communicatively coupled to a plurality of other network devices (613-612), the method comprising:
generating, by a control plane (113) of the first network device, a first debug traffic (252) that simulates traffic received from a first of the plurality of other network devices (613) in the network;
injecting, by the control plane (113) of the first network device, the generated first debug traffic (252) into a data plane (114) of the first network device such that the first debug traffic appears to the data plane as if it originated from the first of the plurality of other network devices in the network;
transmitting, by the data plane (114) of the first network device, a second debug traffic (652) associated with the first debug traffic to a second of the plurality of other network devices (611);
collecting, by the control plane (113) of the first network device, a first debug information of the first debug traffic and a second debug information of the second debug traffic;
transmitting, by the control plane (113) of the first network device, the collected first debug information and second debug information to a control plane (113) of the second network device;
receiving, by a data plane (114) of the second network device, a third debug traffic (653) associated with the first debug traffic from a third of the plurality of other network devices;
collecting, by the control plane (113) of the second network device, a third debug information of the third debug traffic; and
providing, by the control plane (113) of the second network device, the first, second, and third debug information.

2. The method of claim 1, wherein each packet of the first, second, and third debug traffic is tagged with predetermined information indicating the packet is debug traffic, and wherein the first, second, and third debug information is only collected on packets tagged with the predetermined information.

3. The method of claim 1, wherein the first debug traffic is generated based on information of a routing structure maintained by the first network device.

4. The method of claim 1, further comprising:
monitoring, by the control plane (113) of the first network device, traffic received from the first of the plurality of other network devices; and
generating, by the control plane (113) of the first network device, the first debug traffic based on the monitored traffic.

5. The method of claim 4, further comprising:
processing, by the data plane (114) of the first network device, the first debug traffic as the simulated traffic would be processed; and
collecting, by the control plane (113) of the first network device, as part of the first debug information, debug information each time the first debug traffic is processed by the data plane of the first network device.

6. The method of claim 5, wherein the first debug information includes timestamp of each time the first debug traffic is processed by the data plane of the first network device.

7. The method of claim 6, wherein the first debug information further includes information of which path of the data plane of the first network device processed the first debug traffic.

8. The method of claim 7, wherein the first debug information further includes information of success or failure of each time the first debug traffic is processed by the data plane of the first network device.

9. The method of claim 8, further comprising:
transmitting, by the data plane (114) of the second network device, a fourth debug traffic associated with the first debug traffic to a fourth of the plurality of other network devices (612); and
collecting, by the control plane (113) of the second network device, a fourth debug information of the fourth debug traffic.

10. The method of claim 9, further comprising:
receiving, by the data plane (114) of the second network device, a fifth debug traffic associated with the first debug traffic from a fifth of the plurality of other network devices; and
collecting, by the control plane (113) of the second network device, a fifth debug information of the fifth debug traffic.

11. A network comprising a first network device (608-A) communicatively coupled to a second network device (608-B), wherein the first network device and the second network device are communicatively coupled to a plurality of other network devices (613-612), the network comprising:
a control plane (113) located at the first network device, configured to:
generate a first debug traffic (252) that simulates traffic received from a first of the plurality of other network devices (613) in the network, and
inject the generated first debug traffic into a data plane (114) of the first network device such that the first debug traffic appears to the data plane as if it originated from the first of the plurality of other network devices (613) in the network,
the data plane (114) located at the first network device, configured to:
transmit a second debug traffic (652) associated with the first debug traffic to a second of the plurality of other network devices (611);
the control plane (113) located at the first network device, further configured to:
collect a first debug information of the first debug traffic and a second debug information of the second debug traffic, and
transmit the collected first debug information and second debug information to a control plane (113) of the second network device(608-B);
a data plane (114) located at the second network device, configured to receive a third debug traffic (653) associated with the first debug traffic from a third of the plurality of other network devices;
the control plane (113) located the second network device, configured to:
collect a third debug information of the third debug traffic, and
provide the first, second, and third debug information.

12. The network of claim 11, wherein each packet of the first, second, and third debug traffic is tagged with predetermined information indicating the packet is debug traffic, and wherein the first, second, and third debug information is only collected on packets tagged with the predetermined information.

13. The network of claim 11, wherein the first debug traffic is generated based on information of a routing structure maintained by the first network device (608-A).

14. The network of claim 11, wherein the control plane located the first network device is further configured to:
monitor traffic received from the first of the plurality of other network devices (613); and
generate the first debug traffic based on the monitored traffic.

15. The network of claim 14, wherein:
the data plane (114) located at the first network device is further configured to process the first debug traffic as the simulated traffic would be processed; and
the control plane (113) located at the first network device is further configured to collect, as part of the first debug information, debug information each time the first debug traffic is processed by the data plane (114) of the first network device (608-A).

16. The network of claim 15, wherein the first debug information includes a timestamp of each time the first debug traffic is processed by the data plane of the first network device.

17. The network of claim 16, wherein the first debug information further includes information of which path of the data plane of the first network device processed the first debug traffic.

18. The network of claim 17, wherein the first debug information further includes information of success or failure of each time the first debug traffic is processed by the data plane of the first network device.

19. The network of claim 18, wherein:
the data plane (114) located at the second network device is further configured to transmit a fourth debug traffic associated with the first debug traffic to a fourth of the plurality of other network devices; and
the control plane (113) located at the second network device is further configured to collect a fourth debug information of the fourth debug traffic.

20. The network of claim 19, wherein:
the data plane (114) located at the second network device is further configured to receive a fifth debug traffic associated with the first debug traffic from a fifth of the plurality of other network devices; and
the control plane (113) located at the second network device is further configured to collect a fifth debug information of the fifth debug traffic.
